(19) Europäisches Patentamt
European Patent Office
Office européen des brevets

(11) Veröffentlichungsnummer: 0 183 642
B1

(12) **EUROPÄISCHE PATENTSCHRIFT**

(45) Veröffentlichungstag der Patentschrift: 08.03.89

(51) Int. Cl.⁴: C 07 F 5/04, C 10 M 139/00

(21) Anmeldenummer: 85810457.3

(22) Anmeldetag: 07.10.85

(54) **Borhaltige Thioäther als Additive.**

(30) Priorität: 12.10.84 CH 4960/84

(43) Veröffentlichungstag der Anmeldung: 04.06.86 Patentblatt 86/23

(45) Bekanntmachung des Hinweises auf die Patenterteilung: 08.03.89 Patentblatt 89/10

(84) Benannte Vertragsstaaten: BE DE FR GB IT NL

(56) Entgegenhaltungen:
US-A-4 115 286
US-A-4 394 277
US-A-4 465 605

**Die Akte enthält technische Angaben, die nach dem Eingang der Anmeldung eingereicht wurden und die nicht in dieser Patentschrift enthalten sind.**

(73) Patentinhaber: CIBA- GEIGY AG, Klybeckstrasse 141, CH- 4002 Basel (CH)

(72) Erfinder: Wirth, Hermann O. Dr., Lessingstrasse 24, CH- 6140 Bensheim 3 (CH)
Erfinder: Müller, Klaus, Dr., Am Stadtgraben 7, D-7850 Lörrach (DE)
Erfinder: Friedrich, Hans- Helmut, Am Rauhenstein 8, D-6147 Lautertal 2 (DE)

EP 0 183 642 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft schwefelhaltige Borsäurederivate, deren Herstellung und Verwendung als Additive in Schmiermitteln und Hydraulikflüssigkeiten, sowie Schmiermittel und Hydraulikflüssigkeiten enthaltend diese Borsäurederivate.

Schmiermitteln werden im allgemeinen Additive zur Verbesserung der Gebrauchseigenschaften zugesetzt.

Besondere Anforderungen in Bezug auf das Lasttragevermögen werden an Schmiermittel zur Übertragung grösserer Kräfte gestellt. Durch Zusatz von Hochdruck- und verschleissmindernden Additiven werden die sonst auftretenden Verschleisserscheinungen stark reduziert.

In der US-PS-4 394 277 sind Borsäureester von Thioalkandiolen als Zusätze zu Schmiermitteln beschrieben.

Gegenstand der vorliegenden Erfindung sind Verbindungen der Formel

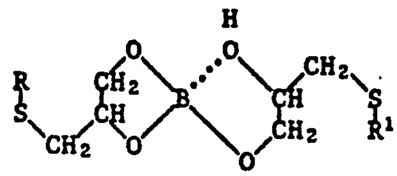

(I)

worin R und $R_1$ gleich oder verschieden sind und Cyclohexyl oder einen Rest

$$-\overset{\displaystyle R^2}{\underset{\displaystyle R^4}{\overset{|}{\underset{|}{C}}}}-R^3 \qquad (II)$$

bedeuten, wobei $R^2$ Wasserstoff oder $C_1$-$C_{12}$-Alkyl ist, und $R^3$ und $R^4$ unabhängig voneinander $C_1$-$C_{12}$-Alkyl sind, und die Reste $R^2$, $R^3$ und $R^4$ zusammen 3-20 C-Atome enthalten.

Sind $R^2$, $R^3$ und $R^4$ $C_1$-$C_{12}$-Alkyl, so handelt es sich um geradkettige oder verzweigte Substitutenten wie z. B. Methyl, Ethyl, Propyl, Butyl, Pentyl, Hexyl, Heptyl, Octyl, Nonyl, Decyl, Undecyl oder Dodecyl.

Bevorzugt sind $R^2$, $R^3$ und $R^4$ alle Alkyl und enthalten zusammen 3-20 C-Atome und bedeuten zusammen mit dem C-Atom, an das sie gebunden sind, z. B. tert.-Butyl, tert.-Octyl, tert.-Nonyl und tert.-Dodecyl, wobei beispielsweise unter tert.-Dodecyl solch ein Rest verstanden werden soll, wie er für tert.-Dodecylmercaptan in "Ullmanns Enzyklopädie der technischen Chemie, 4. Auflage, Band 23, Seite 182, Verlag Chemie, Weinheim" beschrieben ist.

Bevorzugt sind Verbindungen der Formel I, worin R und $R^1$ eine Gruppe der Formel II sind, worin $R^2$ $C_1$-$C_{12}$-Alkyl bedeutet.

Besonders bevorzugt sind Verbindungen der Formel I worin R und $R^1$ eine Gruppe der Formel II sind, wobei $R^2$, $R^3$ und $R^4$ zusammen 3-11 C-Atome enthalten.

Insbesondere bevorzugt sind Verbindungen der Formel I, worin R und $R^1$ eine Gruppe der Formel II sind, wobei $R^2$, $R^3$ und $R^4$ zusammen 8 C-Atome enthalten.

Ganz speziell bevorzugt ist die Verbindung der Formel I worin R und $R^1$ tert.-Nonyl sind.

Beispiele für Verbindungen der Formel I sind solche, in welchen die Substituennten R und $R^1$ die folgende Bedeutung haben:

| | |
|---|---|
| $R = {}^tC_9H_{19}$-, $R^1 = {}^tC_9H_{19}$ - | (Verb. 1) |
| $R = {}^tC_{12}H_{25}$-, $R^1 = {}^tC_{12}H_{25}$- | (Verb. 2) |
| $R = {}^tC_4H_9$-, $R^1 = {}^tC_4H_9$- | (Verb. 3) |
| $R = {}^tC_9H_{19}$-, $R^1 = {}^tC_{12}H_{25}$- | (Verb. 4) |
| $R = {}^nC_6H_{13}$-CH($CH_3$)-, $R^1 = {}^nC_6H_{13}$-CH($CH_3$)- | (Verb. 5) |
| $R = {}^nC_{10}H_{21}$-CH($CH_3$)-, $R^1 = {}^nC_6H_{13}$-CH($CH_3$)- | (Verb. 6) |
| R = Cyclohexyl, $R^1$ = Cyclohexyl | (Verb. 7) |

Die Herstellung der Verbindungen der Formel I erfolgt auf an sich bekannte Weise, z. B. analog der im US-4 394 277 beschriebenen Methode, durch Umsetzung eines schwefelhaltigen 1,2-Alkandiols R-S-$CH_2$-CH(OH)-$CH_2$(OH) mit Borsäure, was zu symmetrischen Verbindungen der Formel I führt, in welchen die Substituenten R und $R^1$ identisch sind. Für unsymmetrische Verbindungen wird das Alkandiol R-S-$CH_2$-CH(OH)-$CH_2$(OH) teilweise durch $R^1$-S-$CH_2$-CH(OH)-$CH_2$(OH) ersetzt.

Vorzugsweise können die Verbindungen der Formel I durch Umsetzung von 2 Molen eines Epoxids der Formel III

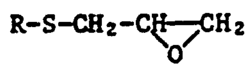 (III)

mit 1 Mol Borsäure hergestellt werden. Die Umsetzung ungefähr stöchiometrischer Mengen (2 : 1) wird bevorzugt, ein geringer Überschuss an Borsäure oder an Epoxid der Formel III führt jedoch ebenfalls zu guten Resultaten.

Die Reaktion kann in einem unpolaren, inerten Lösungsmittel durchgeführt werden, welches vorzugsweise nicht mit Wasser mischbar ist, wie Chloroform, Hexan, Heptan, Cyclohexan oder Toluol. Die Reaktion kann auch ohne Lösungsmittel durchgeführt werden, wobei das Reaktionsmedium bis zum Verschwinden der Borsäure gerührt wird.

Die Reaktionstemperatur ist nicht kritisch, die Reaktion erfolgt bevorzugt bei erhöhter Temperatur, insbesondere bei 80-150°C. Als besonders günstig hat sich die Arbeitsweise bei Rückflusstemperatur des entsprechenden Lösungsmittels erwiesen.

Das bei der Reaktion entstehende Wasser wird nach bekannten Methoden abgetrennt, z. B. durch (azeotrope) Destillation, durch Phasentrennung etc.

Die Verbindungen der Formel I sind von leichtflüssiger, viskoser bis wachsartiger Beschaffenheit und überraschend gut in Schmiermitteln löslich. Sie sind als Zusätze zu Schmiermitteln, insbesondere Motorenölen, besonders geeignet und führen zu einer Verbesserung der Hochdruck- und Antiverschleiss-Eigenschaften; ebenso ist auch auf ihre antioxidierende Wirkung hinzuweisen.

Die Verbindungen der Formel I wirken schon in sehr geringen Mengen als Additive in Schmiermitteln. Sie werden den Schmiermitteln in einer Menge von 0,01 bis 5 Gew.-%, vorzugsweise in einer Menge von 0,05-3 Gew.-%, bezogen auf das Schmiermittel, zugesetzt. Die in Frage kommenden Schmiermittel sind dem Fachmann geläufig und z. B. im "Schmiermittel Taschenbuch" (Hüthig Verlag, Heidelberg, 1974) beschrieben.

Besonders geeignet sind neben Mineralölen z. B. Poly-α-Olefine, Schmierstoffe auf Esterbasis, Phosphate, Glykole, Polyglykole und Polyalkylenglykole.

Die Schmierstoffe können zusätzlich andere Additive enthalten, die zugegeben werden, um die Grundeigenschaften von Schmierstoffen noch weiter zu verbessern; dazu gehören: Antioxidantien, Metallpassivatoren, Rostinhibitoren, Viskositätsindex-Verbesserer, Stockpunkterniedriger, Dispergiermittel, Detergentien, sowie andere Hochdruck-Zusätze und Antiverschleiss-Additive.

**Beispiele für phenolische Antioxidantien**

1.1. Alkylierte Monophenole
2,6-Di-tert.butyl-4-methylphenol
2,6-Di-tert.-butylphenol
2-Tert.butyl-4,6-dimethylphenol
2,6-Di-tert.butyl-4-ethylphenol
2,6-Di-tert.butyl-4-n-butylphenol
2,6-Di-tert.butyl-4-i-butylphenol
2,6-Di-cyclopentyl-4-methylphenol
2-(α-Methylcyclohexyl)-4,6-dimethylphenol
2,6-Di-octadecyl-4-methylphenol
2,4,6-Tri-cyclohexylphenol
2,6-Di-tert.butyl-4-methoxymethylphenol

1.2. Alkylierte Hydrochinone
2,6-Di-tert.butyl-4-methoxyphenol
2,5-Di-tert.butyl-hydrochinon
2,5-Di-tert.amyl-hydrochinon
2,6-Diphenyl-4-octadecyloxyphenol

1.3. Hydroxylierte Thiodiphenylether
2,2'-Thio-bis-(6-tert.butyl-4-methylphenol)
2,2'-Thio-bis-(4-octylphenol)
4,4'-Thio-bis-(6-tert.butyl-3-methylphenol)
4,4'-Thio-bis-(6-tert.butyl-2-methylphenol)

1.4. Alkyliden-Bisphenole
2,2'-Methylen-bis-(6-tert.butyl-4-methylphenol)
2,2'-Methylen-bis-(6-tert.butyl-4-ethylphenol)

2,2'-Methylen-bis-[4-methyl-6-(α-methylcyclohexyl)-phenol]
2,2'-Methylen-bis-(4-methyl-6-cyclohexylphenol)
2,2'-Methylen-bis-(6-nonyl-4-methylphenol)
2,2'-Methylen-bis-(4,6-di-tert.butylphenol)
2,2'-Ethyliden-bis-(4,6-di-tert.butylphenol)
2,2'-Ethyliden-bis-(6-tert.butyl-4-isobutylphenol)
2,2'-Methylen-bis-[6-(α-methylbenzyl)-4-nonylphenol]
2,2'-Methlyen-bis-[6-(α,α-dimethylbenzyl)-4-nonylphenol]
4,4'-Methylen-bis-(2,6-di-tert.butylphenol)
4,4'-Methylen-bis-(6-tert.butyl-2-methylphenol)
1,1-Bis-(5-tert.butyl-4-hydroxy-2-methylphenyl)-butan
2,6-Di-(3-tert.butyl-5-methyl-2-hydroxybenzyl)-4-methylphenol
1,1,3-Tris-(5-tert.butyl-4-hydroxy-2-methylphenyl)-butan
1,1-Bis-(5-tert.butyl-4-hydroxy-2-methylphenyl)-3-n-dodecylmercaptobutan
Ethylenglycol-bis-[3,3-bis-(3'-tert.butyl-4'-hydroxyphenyl)-butyrat]
Di-(3-tert.butyl-4-hydroxy-5-methylphenyl)-dicyclopentadien
Di-[2-(3'-tert.butyl-2'-hydroxy-5'-methyl-benzyl)-6-tert.butyl-4-methyl-phenyl]-terephthalat.

1.5. Benzylverbindungen
1,3,5-Tri-(3,5-di-tert.butyl-4-hydroxybenzyl)-2,4,6-trimethylbenzol
Di-(3,5-di-tert.butyl-4-hydroxybenzyl)-sulfid
3,5-di-tert.butyl-4-hydroxybenzyl-mercaptoessigsäure-isooctylester
Bis-(4-tert.butyl-3-hydroxy-2,6-dimethylbenzyl)dithiol-terephthalat
1,3,5-Tris-(3,5-di-tert.butyl-4-hydroxybenzyl)-isocyanurat
1,3,5-Tris-(4-tert.butyl-3-hydroxy-2,6-dimethylbenzyl)-isocyanurat
3,5-Di-tert.butyl-4-hydroxybenzyl-phosphonsäure-dioctadecylester
3,5-Di-tert.butyl-4-hydroxybenzyl-phosphonsäure-monoethylester, Calcium-salz.

1.6. Acrylaminophenole
4-Hydroxy-laurinsäureanilid
4-Hydroxy-stearinsäureanilid
2,4-Bis-octylmercapto-6-(3,5-di-tert.butyl-4-hydroxyanilino)-s-triazin
N-(3,5-di-tert.butyl-4-hydroxyphenyl)-carbaminsäureoctylester.

1.7. Ester der β-(3,5-Di-tert.butyl-4-hydroxyphenyl)-propionsäure mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.8. Ester der β-(5-tert.butyl-4-hydroxy-3-methylphenyl)-propionsäure mit ein- oder mehrwertigen Alkoholen, wie z. B. mit

| | |
|---|---|
| Methanol | Diethylenglycol |
| Octadecanol | Triethylenglycol |
| 1,6-Hexandiol | Pentaerythrit |
| Neopentylglycol | Tris-hydroxyethyl-isocyanurat |
| Thiodiethylenglycol | Di-hydroxyethyl-oxalsäurediamid |

1.9. Amide der β.-(3,5-Di-tert.butvl-4-hydroxyphenyl)-propionsäure, wie z. B.
N,N'-Di-(3,5-di-tert.butyl-4-hydroxyphenylpropionyl)-hexamethylendiamin
N,N'-Di-(3,5-di-tert.butyl-4-hydroxyphenylpropionyl)-trimethylendiamin
N,N'-Di-(3,5-di-tert.butyl-4-hydroxyphenylpropionyl)-hydrazin

Beispiele für aminische Antioxidantien:
N,N'-Di-isopropyl-p-phenylendiamin
N,N'-Di-sec-butyl-p-phenylendiamin
N,N'-Bis(1,4-dimethyl-pentyl)-p-phenylendiamin
N,N'-Bis(1-ethyl-3-methyl-pentyl)-p-phenylendiamin
N,N'-Bis(1-methyl-heptyl)-p-phenylendiamin

N,N'-Diphenyl-p-phenylendiamin
N,N'-Di-(naphthyl-2-)-p-phenylendiamin
N-Isopropyl-N'-phenyl-p-phenylendiamin
N-(1,3-Dimethyl-butyl)-N'-phenyl-p-phenylendiamin
N-(1-Methyl-heptyl)-N'-phenyl-p-phenylendiamin
N-Cyclohexyl-N'-phenyl-p-phenylendiamin
4-(p-Toluol-sulfonamido)-diphenylamin
N,N'-Dimethyl-N,N'-di-sec-butyl-p-phenylendiamin
Diphenylamin
4-Isopropoxy-diphenylamin
N-Phenyl-1-naphthylamin
N-Phenyl-2-naphthylamin
octyliertes Diphenylamin
4-n-Butylaminophenol
4-Butyrylamino-phenol
4-Nonanoylamino-phenol
4-Dodecanoylamino-phenol
4-Octadecanoylamino-phenol
Di-(4-methoxy-phenyl)-amin
2,6-Di-tert-butyl-4-dimethylamino-methyl-phenol
2,4'-Diamino-diphenylmethan
4,4'-Diamino-diphenylmethan
N,N,N,N'-Tetramethyl-4,4'-diamino-diphenylmethan
1,2-Di-[(2-methyl-phenyl)-amino]-ethan
1,2-Di-(phenylamino)-propan
(o-Tolyl)-biguanid
Di-[4-(1',3'-dimethyl-butyl)-phenyl)]amin
tert-octyliertes N-Phenyl-1-naphthylamin.
Gemisch aus mono- und dialkylierten tert-Butyl-/tert-Octyldiphenylaminen.

Beispiele für Metallpassivatoren sind:
für Kupfer, z. B.:
Benztriazol, Tetrahydrobenztriazol,, 2-Mercaptobenzthiazol, 2,5-Dimercaptothiadiazol, Salicylidenpropylendiamin, Salze von Salicylaminoguanidin.

Beispiele für Rost-Inhibitoren sind:

a) Organische Säuren, ihre Ester, Metallsalze und Anhydride, z. B.: N-Oleoyl-sarcosin, Sorbitan-mono-oleat, Blei-naphthenat, Dodecenylbernsteinsäure-anhydrid, Alkenylbernsteinsäure-Halbester, 4-Nonylphenoxy-essigsäure.

b) Stickstoffhaltige Verbindungen, z. B.:
I. Primäre, sekundäre oder tertiäre aliphatische oder cycloaliphatische Amine und Amin-Salze von organischen und anorganischen Säuren, z. B. öllösliche Alkylammoniumcarboxylate.
II. Heterocyclische Verbindungen z. B.:
Substituierte Imidazoline und Oxazoline.

c) Phosphorhaltige Verbindungen, z. B.: Aminsalze von Phosphorsäurepartialestern.

d) Schwefelhaltige Verbindungen, z. B.: Barium-dinonylnaphthalin-sulfonate, Calciumpetroleum-sulfonate.

Beispiele für Viskositätsindex-Verbesserer sind z. B.
Polymethacrylate, Vinylpyrrolidon/Methacrylat-Copolymere, Polybutene, Olefin-Copolymere, Styrol/Acrylat-Copolymere.

Beispiele für Stockpunkterniedriger sind z. B.
Polymethacrylat, alkylierte Naphthalinderivate.

Beispiele fur Dispergiermittel/Tenside sind z. B.:
Polybutenylbernsteinsäure-imide, Polybutenylphosphonsäurederivate, basische Magnesium-, Calcium-, und Bariumsulfonate und -phenolate.

Beispiele für Hochdruck- und/oder verschleissmindernde Additive sind z. B.:
Schwefel und/oder Phosphor und/oder Halogen enthaltende Verbindungen, wie geschwefelte pflanzliche Öle, Zinkdialkyldithiophosphate, Tritolyl-phosphat, chlorierte Paraffine, Alkyl- und Aryldisulfide.

**Beispiel 1** (Verbindung 1)

In einem 1 l 3-Halskolben mit Wasserabscheider werden 260 g (1,2 Mol) $^{t}C_9H_{19}$-Glycidylthioether (zu dessen Herstellung wird $^{t}C_9H_{19}SH$ ex Phillips Petroleum Co. verwendet), 34 g (0,55 Mol) Borsäure und 450 ml Toluol vereinigt und unter Rühren und Rückflussbedingungen das Reaktionswasser azeotrop entfernt. Nach einer Klärfiltration wird mittels eines Rotationsverdampfers das Toluol entfernt.

Ausbeute: 281 g; farblose Flüssigkeit
$n^{20}_D$: 1,4990.

Eine Säuretitration bezogen auf den Boeseken-Komplex ergibt einen Gehalt von 93 %.

**Beispiel 2** (Verbindung 2)

In analoger Weise wurde der $^{t}C_{12}H_{25}$-Glycidylthioether umgesetzt.
Farblose viskose Flüssigkeit: $n^{20}_D$: 1,4952.

**Beispiel 3** (Verbindung 1)

In einem 250 ml 3-Halskolben werden 6,2 g (0,1 Mol) Borsäure, 47,0 g (0,2 Mol) $^{t}C_9H_{19}$-Glycerinmonothioether und 150 ml Toluol unter Rühren und Rückflussbedingungen azeotrop entwässert.
Das Reaktionsgemisch wird mit Hilfe eines Rotationsverdampfers eingeengt, zuletzt mit Hilfe einer Vakuumpumpe.

Ausbeute: 48,8 g: farblose viskose Flüssigkeit
$n^{20}_D$: 1,4965

Die weitere Struktur ist durch $^{11}B$-NMR sichergestellt.

**Beispiel 4** (Verbindung 2)

In gleicher Weise wird $^{t}C_{12}H_{25}$-Glycerin-monothioether umgesetzt.
Farblose Flüssigkeit: $n^{20}_D$: 1,4950.

**Beispiel 5:** Prüfung des Lasttrage-Vermögens (FGZ-Prüfung nach DIN 51 354).

Als Testflüssigkeit für die Wirksamkeit der Additive wird ein Mineralöl ISO VG 32 verwendet.
Die gefundenen Werte sind in Tabelle I wiedergegeben.

**Tabelle I**

| Additiv Beispiel Nr. | Konz. Additiv % | Schadenkraftstufe |
|---|---|---|
| 1 | 0,25 | 10 |
| 2 | 0,25 | 10 |
| Kontrolle | - | 5 - 6 |

## Patentansprüche

1. Verbindungen der Formel I

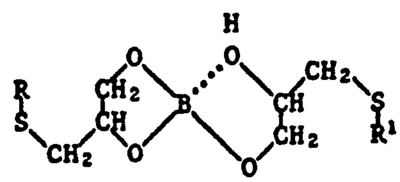

(I)

worin R und $R^1$ gleich oder verschieden sind und Cyclohexyl oder einen Rest

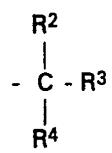

(II)

bedeuten, wobei $R^2$ Wasserstoff oder $C_1$-$C_{12}$-Alkyl ist, und $R^3$ und $R^4$ unabhängig voneinander $C_1$-$C_{12}$-Alkyl sind und die Reste $R^2$, $R^3$ und $R^4$ zusammen 3-20 C-Atome enthalten.

2. Verbindungen gemäss Anspruch 1 der Formel I, worin R und $R^1$ eine Gruppe der Formel II sind, worin $R^2$ $C_1$-$C_{12}$-Alkyl bedeutet.

3. Verbindungen gemäss Anspruch 1 der Formel I, worin R und $R^1$ eine Gruppe der Formel II sind, wobei $R^2$, $R^3$ und $R^4$ zusammen 3-11 C-Atome enthalten.

4. Verbindungen gemäss Anspruch 3, wobei $R^2$, $R^3$ und $R^4$ zusammen 8 C-Atome enthalten.

5. Verbindung gemäss Anspruch 1 der Formel I, worin R und $R^1$ tert.-Nonyl sind.

6. Schmiermittel enthaltend eine Verbindung der Formel I gemäss Anspruch 1.

7. Verwendung der Verbindungen der Formel I gemäss Anspruch 1 als Additve für Schmiermittel.

8. Verfahren zum Herstellen von Verbindungen der Formel I gemäss Anspruch 1, dadurch gekennzeichnet, dass man 2 Mole einer Verbindung der Formel III

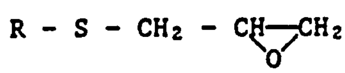

(III)

mit 1 Mol Borsäure umsetzt.

9. Verfahren gemäss Anspruch 8, dadurch gekennzeichnet, dass man die Verbindung der Formel (III) teilweise durch eine Verbindung der Formel (IIIa)

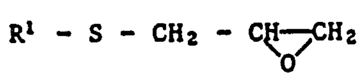

(IIIa)

ersetzt.

## Claims

1. A compound of the formula I

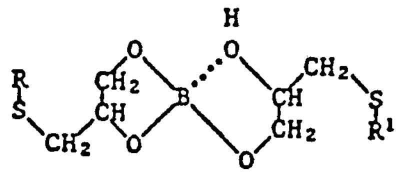

(I)

in which R and $R^1$ are identical or different, and are cyclohexyl or a radical

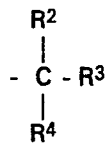

(II)

in which $R^2$ is hydrogen or $C_1$-$C_{12}$alkyl, and $R^3$ and $R^4$ independently of one another are each $C_1$-$C_2$alkyl, and the radicals $R^2$, $R^3$ and $R^4$ together contain 3-20 C atoms.

2. A compound according to claim 1 of the formula I in which R and $R^1$ are a group of the formula II in which $R^2$ is $C_1$-$C_{12}$alkyl.

3. A compound according to claim 1 of the formula I in which R and $R^1$ are a group of the formula II in which $R^2$, $R^3$ and $R^4$ together contain 3-11 C atoms.

4. A compound according to claim 3, in which $R^2$, $R^3$ and $R^4$ together contain 8 C atoms.

5. A compound according to claim 1 of the formula I in which R and $R^1$ are tert-nonyl.

6. A lubricant containing a compound of the formula I according to claim 1.

7. Use of a compound of the formula I according to claim 1 as an additive in lubricants.

8. Process for producing a compound of the formula I according to claim 1, which process comprises reacting 2 moles of a compound of the formula III

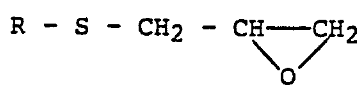

(III)

with 1 mole of boric acid.

9. Process according to claim 8, wherein the compound of the formula (III) is partially replaced by a compound of the formula (IIIa)

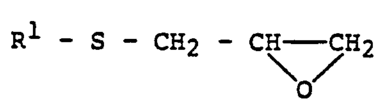

(IIIa).

**Revendications**

1. Les composés de formule I ci-dessous:

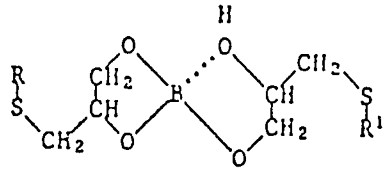

(I)

dans laquelle R et $R^1$, qui peuvent être identiques ou différents l'un de l'autre, représentent chacun le groupe cyclohexyle ou un radical

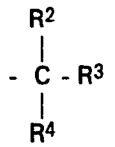 (II)

$R^2$ étant l'hydrogène ou un alkyle en $C_1$-$C_{12}$ et $R^3$ et $R^4$ étant chacun, indépendamment l'un de l'autre, un alkyle en $C_1$-$C_{12}$, et les radicaux $R^2$, $R^3$ et $R^4$ ont ensemble au total de 3 à 20 atomes de carbone.

2. Un composé de formule I selon la revendication 1 dans lequel R et $R^1$ sont chacun un groupe de formule II dont $R^2$ est un alkyle en $C_1$-$C_{12}$.

3. Un composé de formule I selon la revendication 1 dans lequel R et $R^1$ sont chacun un groupe de formule II dont $R^2$, $R^3$ et $R^4$ ont ensemble au total de 3 à 11 atomes de carbone.

4. Un composé selon la revendication 3 dans lequel $R^2$, $R^3$ et $R^4$ ont ensemble au total 8 atomes de carbone.

5. Un composé de formule I selon la revendication 1 dans lequel R et $R^1$ sont chacun le groupe tert-nonyle.

6. Un lubrifiant contenant un composé de formule I suivant la revendication 1.

7. Méthode d'emploi d'un composé de formule I selon la revendication 1 comme additif pour des lubrifiants.

8. Procédé de fabrication des composés de formule I selon la revendication 1, procédé selon lequel on fait réagir un composé de formule III:

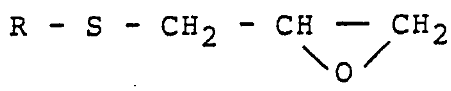 (III)

avec de l'acide borique.

9. Procédé selon la revendication 8 dans lequel on remplace une partie du composé de formule III par un composé de formule IIIa:

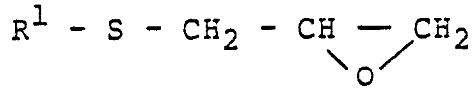 (IIIa).